# EUROPEAN PATENT APPLICATION

(11) **EP 2 868 190 A1**
(43) Date of publication of application: **06.05.2015**
(21) Application number: 12880040.6
(22) Date of filing: 29.06.2012
(51) Int. Cl.: A01G 31/00

(54) **ATTACHMENT FOR HYDROPONICS, AND HYDROPONIC SET**

(71) Applicant: Midori No Market Inc., Hyogo 666-0123 (JP)
(72) Inventor: HASAGAWA, Takuya, Kawanishi-shi Hyogo 666-0123 (JP); KATAI, Masaru, Kawanishi-shi Hyogo 666-0123 (JP)
(74) Representative: Hering, Hartmut
(86) International application number: PCT/JP2012/066669
(87) International publication number: WO 2014/002248

(57) **Abstract**

The hydroponics attachment 1 capable of steady growing of even taproot-type plant and easy plant relocation comprises : the cap member 3 with the opening 19 at its top, which is detachably screwed, via the threaded portion 28, on the mouth of the drink bottle 26; the bottomed cylinder-shaped case body 2 fitted in the opening 19; and the water-holding element 4 placed in the case body 2 for absorbing water in the drink bottle 26, so that hydroponics can be done with absorbed water. The single-piece water-holding element 4 is made of a plurality of aligned filaments. The case body 2 has, at its bottom, the insertion hole 24 for guiding the plant 27's root growing downward through the water-holding element 4 to go under the case body 2. The opening dimension of the insertion hole 24 is smaller than the outer dimension of the water-holding element 4.

## Description

### Technical Field

The present invention relates to a hydroponics attachment and a hydroponics kit.

### Background Art

In recent years, indoor gardening (kitchen gardening), which is an activity to grow plants such as herbs and vegetables with ease in a narrow place such as a kitchen, a living room, or a balcony, is gaining in popularity. However, even if it is desired to do such a gardening activity, quite often it will be difficult to secure a space indoors for placement of a large plant pot and so forth, which has led to the idea of reusing a small container familiar in a kitchen, for example, a PET bottle and a package for bean curd, for gardening activity.

For example, in Patent literature 1, there is disclosed a method for growing a plant utilizing a used, common drink bottle (for example, a PET bottle), in which a cap member of an attachment for soilless gardening, or water gardening is attached to the mouth of the drink bottle, and a case body of the water gardening attachment is immersed in water stored in the drink bottle, so that the water in the drink bottle can be utilized for water gardening. By using this water gardening attachment, it is possible to grow plants easily by water gardening with reuse of an empty PET bottle.

### Prior Art Reference

### Patent literature

Patent literature 1: Japanese Utility Model Registration No. 3168217

### Summary of the Invention

### Problems to be solved by the Invention

Among hydroponically-grown plants, some have a rooting habit called a taproot system, or equivalently have a root which grows straight downward. Plants of such a taproot type include tomato, for example. If a taproot-type plant is grown by water gardening using the water gardening attachment disclosed in Patent literature 1, the plant will grow, with its root developing straight downward.

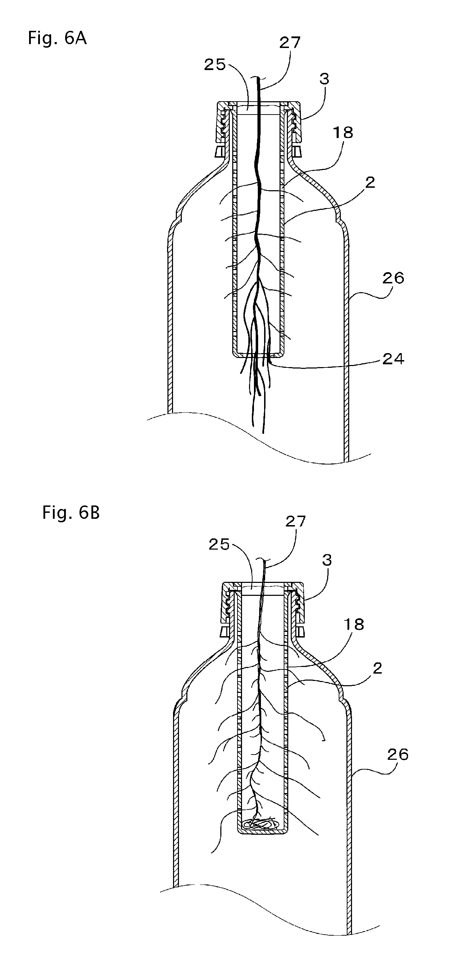

However, in the water gardening attachment disclosed in Patent literature 1, although the case body bears a hole at its side surface, there is no hole at the bottom of the case body. Therefore, the downwardly-growing root of the plant, after reaching the bottom of the case body, stays on the bottom of the case body in spiral form, and is no longer grown up (refer to Fig. 6B). In consequence, the root of the plant is restrained from growing further downward, which results in inhibition of steady growth of the plant. That is, the problem posed by the water gardening attachment presented in Patent literature 1 is that a plant having a root which grows downward, in particular a taproot-type plant, cannot be grown satisfactorily.

Furthermore, if the plant is restrained from downward root development, it will grow with its root developing sideward. The sidewardly-growing root goes out of the case through the hole formed at the side surface thereof, and eventually spreads over the side surface of the case body. The root spreading over the side surface of the case body becomes a hindrance to relocation of the grown plant to another drink bottle, for example. More specifically, the attachment including the case body needs to be pulled out upward from the bottle for the relocation of the grown plant. However, at the time of extraction of the attachment, a plurality of root portions lying at the side surface of the case body may be caught in the mouth of the drink bottle, which makes the extraction difficult. Furthermore, if the attachment is pulled upward forcibly, the root of the grown plant will be damaged, with the consequent risk of inhibition of the growth of the plant.

In this regard, formation of a hole at the bottom of the case body may be an idea that would prevent inhibition of the growth of the taproot-type plant, but, the drilling of such a hole gives rise to a drop of a water-holding element from the interior of the case body. That is, the water-holding element adopted in the construction presented in Patent literature 1 is made of a material which is likely to lose its shape after water absorption (for example, a material composed of sand-like fine particles compacted by a water-soluble adhesive, etc.), and therefore, if the bottom of the case body is formed with a hole, the water-holding element will fall out of the case body through the hole. In consequence, the case body becomes devoid of the water-holding element required for hydroponic, or soilless growing of the plant, which makes the water gardening activity to grow the plant difficult.

The present invention has been devised in view of the problems as mentioned supra, and accordingly an object of the present invention is to provide a hydroponics attachment and a hydroponics kit adapted for steady growth of plants, including even a taproot-type plant, and for easy plant relocation.

### Means for solving the problem

In order to accomplish the above object, the following technical means is adopted for the implementation of the present invention.

A hydroponics attachment pursuant to the present invention comprises: a cap member which is, via a threaded portion preformed on a mouth of a drink bottle for cap attachment, detachably screwed on the mouth of the drink bottle, and has an opening formed on an upper surface thereof; a case body shaped like a cylinder with a bottom, which is fitted in the opening of the cap member; and a water-holding element placed in an interior of the case body, for absorbing water stored in the drink bottle, so that hydroponics can be carried out with use of the water absorbed by the water-holding element. The water-holding element is designed in single-piece structure with use of a plurality of filaments. The lower end of the case body is formed with an insertion hole in opening form for guiding a root of a plant growing downward through the water-holding element to go down below the case body. The insertion hole has an opening dimension which is smaller than an outer dimension of the water-holding element.

It is preferable that the water-holding element should be made of a plurality of filaments put together in aligned and parallel relation longitudinally of the case body.

It is preferable that the water-holding element should be placed inside the case body, with its upper surface positioned at a level lower than the level of the upper end of the case body.

A hydroponics kit pursuant to the present invention comprises: the hydroponics attachment as above described; seed of a plant which is to be grown by hydroponics; and a germination promoter for allowing the seed of the plant to be fixedly set on the upper surface of the water-holding element.

### Effects of the Invention

According to the hydroponics attachment and the hydroponics kit of the present invention, it is possible to grow even a taproot-type plant steadily, as well as to achieve easy plant relocation.

### Brief Description of Drawings

[Fig. 1] Figure 1 is a view showing how the hydroponics attachment of the present invention is to be used.
[Fig. 2A] Figure 2A is a plan view of the case body of the hydroponics attachment of the present invention.
[Fig. 2B] Figure 2B is a front view of the case body of the hydroponics attachment of the present invention.
[Fig. 2C] Figure 2C is a sectional view of the case body of the hydroponics attachment of the present invention taken along the line Z-Z.
[Fig. 2D] Figure 2D is a bottom view of the case body of the hydroponics attachment of the present invention.
[Fig. 3A] Figure 3A is a plan view of the cap member of the hydroponics attachment of the present invention.
[Fig. 3B] Figure 3B is a sectional front view of the cap member of the hydroponics attachment of the present invention.
[Fig. 4A] Figure 4A is a plan view of the hydroponics attachment of the present invention.
[Fig. 4B] Figure 4B is a sectional front view of the hydroponics attachment of the present invention.
[Fig. 5] Figure 5 is an enlarged sectional view of the hydroponics attachment.
[Fig. 6A] Figure 6A is a schematic view showing the spread of plant roots in the course of hydroponics using the hydroponics attachment of the present invention.
[Fig.6B] Figure 6B is a schematic view showing the spread of plant roots in the course of water gardening using a water gardening attachment of conventional design.

### Modes for Carrying out the Invention

A hydroponics attachment 1 pursuant to the present invention is attached to a drink bottle 26 such as a "PET bottle" for hydroponic growing of a plant 27.

Examples of the drink bottle 26 to which the hydroponics attachment 1 can be fitted include containers for green tea, mineral water, sports drink, juice, coffee, black tea, and so forth, respectively. For example, a "PET bottle" made of a PET resin, a plastic bottle made of a resin other than the PET resin, a "bottle can" made of a metal such as aluminum or iron, or a "glass bottle" made of glass can be used as the drink bottle 26. Moreover, different-sized bottles, including those made in standardized sizes: 370 ml, 500 ml, 750 ml, 1000 ml, 1500 ml, 2000 ml, etc. (internal volume) and even those made in non-standard sizes, can be used as the drink bottle 26.

In general, the drink bottle 26 is fitted at its mouth with a cap for improvement in storage stability and safety of a beverage contained therein. The cap is usually designed as a screw-on cap that can be detachably fitted to the mouth of the drink bottle 26 for free opening and closing of the bottle once opened, and thus the mouth is preformed with a threaded portion 28 for cap attachment in most cases.

The hydroponics attachment 1 can be attached to the drink bottle 26 by making use of such an existing threaded portion 28. For use of the hydroponics attachment, the cap belonging to the drink bottle 26 is removed to reuse the drink bottle 26 alone. The hydroponics attachment 1 is intended to allow the hydroponic growth of the plant 27 when attached to the drink bottle 26 empty of, e.g. a beverage, with its cap removed, that contains water and nutrients.

Next, a description will be given as to the plant 27 which can be grown by means of hydroponic growing using the hydroponics attachment 1. As such a plant 27, various types of plants, including vegetables, flowering plants, and foliage plants, can be named. It is said that ordinary plants 27 can be grown by means of hydroponic growing, with the exception of a few plants of the type which grows better in arid conditions. Accordingly, so long as the plant 27 is of the type which is able to grow by means of hydroponic growing, the hydroponics attachment 1 is applicable to any kind of seed.

Examples of the plant 27 include vegetables such as tomato and green perilla, herbs such as peppermint and lemon balm, and fruits such as wild strawberry. Such a plant 27 is, in the form of seed or bulb, or the form of stem or root cut to an appropriate size, set on an upper surface of a water-holding element 4 of the hydroponics attachment 1. In the following description, the term "seed" is construed as encompassing, in addition to genuine seed, the bulb form, the root form, and the stem form.

Moreover, a taproot-type plant 27 is particularly desirable for use as such a plant 27. The taproot-type plant 27 is of the type which grows, with its main root developing substantially straight so as to go deep underground, and, among those as mentioned above, for example, vegetables such as tomato, root vegetables such as Japanese white radish and carrot, and leaf vegetables such as potherb mustard and spinach come under this classification.

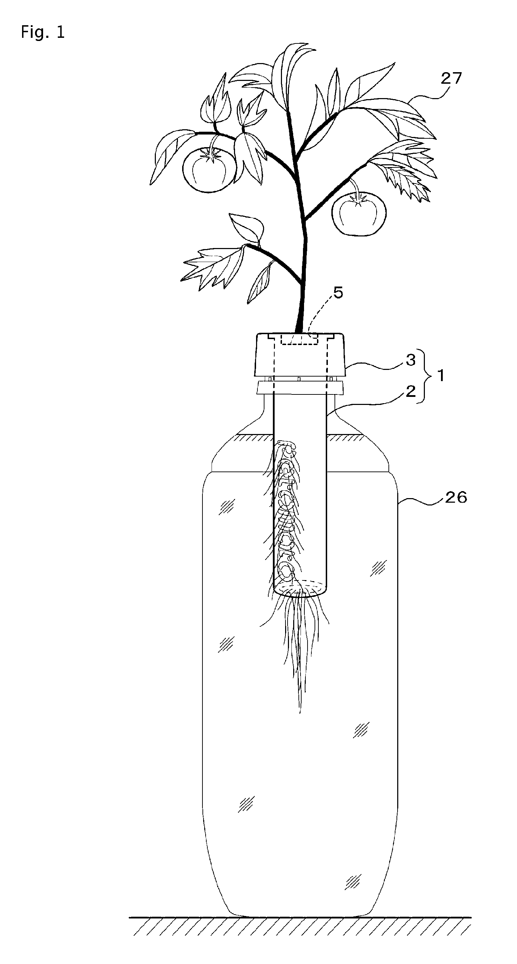

Figure 1 is a view of a case where the hydroponics attachment 1 of the present invention is used with tomato seed, illustrating the state of hydroponic growing of tomato, now reaching a certain level of growth through seed germination. Note that the drink bottle 26 is shown in section in Fig. 1 for illustration of its interior.

The hydroponics attachment 1 of the present invention comprises: a cap member 3 which is detachably screwed on the threaded portion 28 preformed in the drink bottle 26 for cap attachment; a case body 2 in the shape of a cylinder with a bottom, or bottomed cylinder, which is fitted to the cap member 3; and a water-holding element 4 placed inside the case body 2, which absorbs water stored in the drink bottle 26 for the supply of water to the plant 27.

The cap member 3 has an opening 19 formed in the middle of the upper surface thereof for insertion of the case body 2, and, the case body 2 is inserted from above into the opening 19. Moreover, the case body 2 has formed at its upper end a top opening 5 for the placement of the seed of the plant 27.

The following is a detailed description of the case body 2, the cap member 3, and the water-holding element 4 that constitute the hydroponics attachment 1.

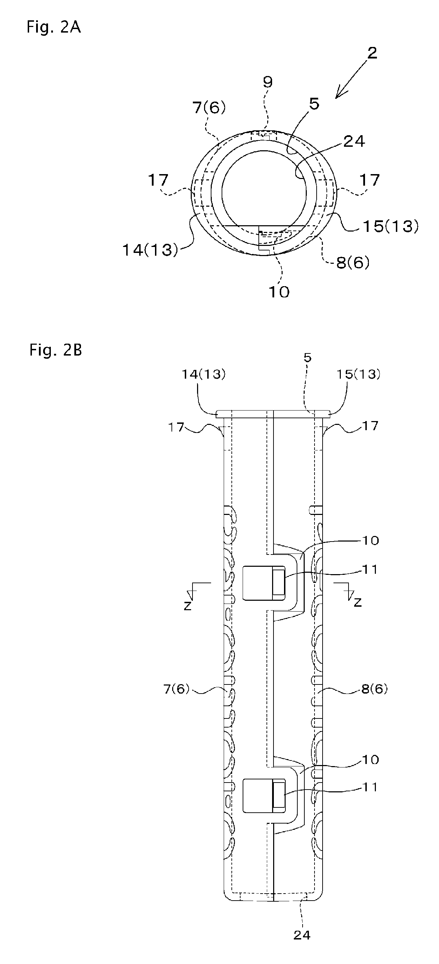

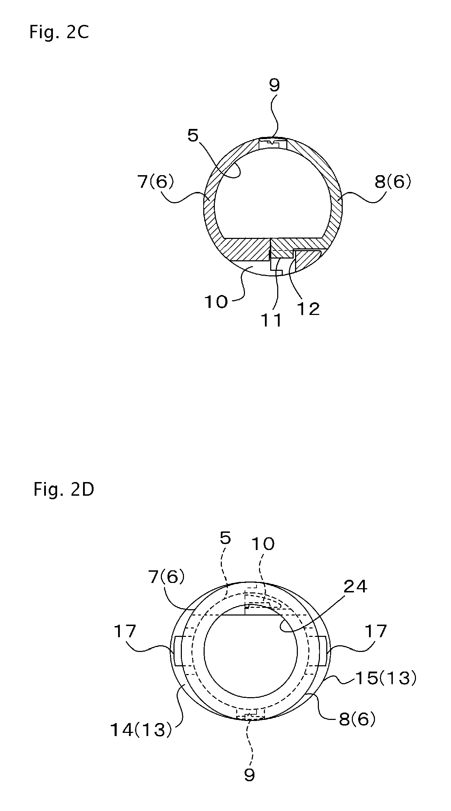

Figure 2A is a plan view of the case body 2 provided in the hydroponics attachment 1 of the present invention, and Fig. 2B is a front view of the case body 2. Moreover, Fig. 2C is a sectional view taken along the line Z-Z depicted in Fig. 2B, and Fig. 2D is a bottom view of the case body 2.

The case body 2 is made for example of synthetic resin or metal, and outwardly looks like a bottomed cylinder. The case body 2 has a hollow interior in which the water-holding element 4 is placed in such a way as to be surrounded with the case body. In this embodiment, the case body 2 is given the shape of a bottomed circular cylinder, the outer diameter of which is adj usted to fall in a range from 15 mm to 20 mm, preferably from 18 mm to 20 mm, for passage through the mouth of the drink bottle 26. Moreover, the longitudinal dimension (length) of the case body 2 is adjusted to fall in a range from 50 mm to 180 mm, preferably adjusted to about 100 mm, for absorption of water near the bottom of the drink bottle 26.

The case body 2 has formed on its outer periphery a plurality of water-guiding holes 18 for guiding water to enter and exit from the case body 2. In forming the water-guiding holes 18, while circular holes or rectangular holes may be arranged on the outer periphery of the case body 2 in a random fashion, as shown in Figs. 2A to 2D as will hereafter be described, it is advisable to place the water-guiding holes 18 in a character- or figure-forming arrangement for improvement in design.

As shown in Fig. 2A, the case body 2 has formed at its upper end the top opening 5 facing upward. The top opening 5 is left opened so as to admit sunlight and air to the interior of the case body 2 for the growth of the plant 27, as well as to allow the plant 27 to grow steadily in the upward direction in the course of growing without any hindrance.

As shown in Fig. 2B, the case body 2 is assembled by combining two body segments 6 together, and more specifically the case body 2 is composed of a pair of right-hand and left-hand body segments 6 that combine to produce an appearance like a bottomed cylinder, and a coupling strip 9 for combining the body segments 6 into one. The shape of the pair of right-hand and left-hand body segments 6 is defined by dividing a bottomed cylinder longitudinally into halves, of which the left half corresponds to a left-hand body segment 7 and the right half corresponds to a right-hand body segment 8. Moreover, the coupling strip 9 is provided in each of two longitudinal locations, for coupling the paired body segments 6 together for free bendings. Thus, in the case of coupling the paired body segments 6 together by the coupling strip 9, the body segments 6 become united via the coupling strip 9, and, in this case, these components can be molded at one time by means of injection molding.

On the other hand, in the paired body segments 6 situated on both sides, viz., the right and left sides, respectively, of the coupling strip 9, a tying portion 10 is externally provided in a position farther away the coupling strip, for disengageably engaging the body segments 6 at the sides thereof opposite the coupling strip 9. The tying portion 10 allows assembly of the right-hand and left-hand body segments 6 into substantially cylindrical form by bringing about engagement between a protuberant piece 11 formed in the right-hand body segment 8 and an engagement hole 12 formed by drilling the left-hand body segment 7 so as to be engageable with the protuberant piece 11.

The case body 2 has formed at the outer periphery of its upper end a projection 13 extending radially outwardly. The proj ection 13 consists of a left-hand proj ection 14 extending leftward in flange form from the left-hand body segment 7 and a right-hand projection 15 extending rightward in flange form from the right-handbody segment 8. Thus , in the case of providing the right-hand and left-hand projections 13 extending rightward and leftward, respectively, the case body 2 can be restrained from downward movement as the projection 13 engages with a projection engagement portion 16 of the cap member 3 as will hereafter be described, wherefore the case body 2 can be positioned in an inserted state relative to the cap member 3.

As shown in Figs. 2B and 2C, that part of the outer periphery of the case body 2 which is situated below the proj ection 13 as above described is formed with a retainer member 17 for allowing the case body 2 to be inserted fixedly in the cap member 3. The retainer member 17 is formed by making a U-shaped incision in the outer periphery of the case body 2, and, the lower part of the retainer member 17 is connected to the outer periphery of the case body 2, whereas the upper part thereof is configured for free rocking motion. With the upper end of this rockable retainer member 17 in engagement with the opening edge of the opening 19 of the cap member 3 as will hereafter be described, the case body 2 is inserted and fixed in place.

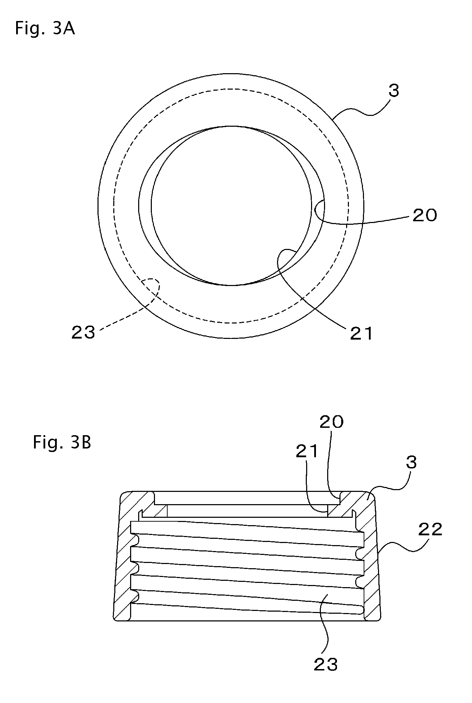

Figures 3A and 3B are a plan view and a sectional front view, respectively, of the cap member 3 of the hydroponics attachment 1 of the present invention.

The cap member 3 has the shape of a short cylinder with openings formed one at the upper and lower sides thereof. The outer periphery of the cap member 3 is formed with surface asperities by means of embossment, sandblasting, or otherwise, so that the cap member 3 can be easily taken and turned by user's fingers for its screwing on the threaded portion 28 of the drink bottle 26. Moreover, the inner periphery of the cap member 3 is formed with an internal thread 23 which engages with the threaded portion 28 preformed at the mouth of the drink bottle 26 described previously, so that the cap member 3 can be detachably attached to the mouth of the drink bottle 26.

The non-slip portion 22 as above described may have either the form of a plurality of grooves extending in a top-bottom direction, or vertical direction, that are created circumferentially of the cap member or the form of a non-slip tape stuck on the surface thereof. Moreover, instead of being configured merely as grooves, the non-slip portion 22 may be defined by dot-like concavities, or a pattern of grooves and dot-like concavities combined so that they will appear as a certain logo or symbol when viewed at a distance.

As shown in Fig. 3A, the cap member 3 has formed at its upper surface the opening 19 passing through the midportion of the cap member 3 in the vertical direction. In the opening 19, an upper part 20 is opened substantially elliptically to define a vertical hole, and a lower part 21 is opened substantially circularly to define a vertical hole; that is, the opening 19 has a structure of two holes having different opening contours connected to each other in the vertical direction. More specifically, as shown in Fig. 3B, the upper part 20 of the opening 19 is larger in width than the lower part 21 of the opening 19 in a right-left direction, or horizontal direction, yet is equal in width to the lower part 21 in a front-rear direction. The width of the lower part 21 is so adjusted as to permit the passage of the lower part of case body 2 on one hand, but to restrict the passage of the projection 13 on the other hand. Thus, the projection 13 fits in the upper part 20 of the opening 19.

Accordingly, upon slipping of the case body 2 into the opening 19 from above, the projection 13 fits in the upper part 20 of the opening 19 to bring the case body 2 into a fixedly inserted state, and thereby the case body 2 and the cap member 3 can rotate together. That is, the upper part 20 of the opening 19 in which the projection 13 engages serves as an engagement-receiving portion for restraining the case body 2 from downward movement to effect positioning of the case body 2 in the inserted state.

The water-holding element 4, which is made of a highly absorbent, breathable material, is cylindrically shaped so as to be housed inside the case body 2. The upper surface of the water-holding element 4 is made flat for the placement of the seed of the plant 27 described hereinabove.

The water-holding element 4 has the capability of promoting the growth of the seed of the plant 27 by absorbing water stored in the drink bottle 26 to keep the seed of the plant 27 in a water-holding state on a constant basis.

As shown in Fig. 6B, assuming that a water gardening attachment of conventional design is used for the soilless growing of the plant 27, when the plant 27 is of the type which grows with its root developing downward, such for example as a taproot-type plant, since the conventional water gardening attachment has no hole at the bottom of its case body, it follows that the downwardly-growing root will no longer go further downward beyond the bottom of the case body, which results in difficulty in the steady growth of the plant 27.

Furthermore', the conventional water gardening attachment employs a water-holding element made of a material which is likely to lose its shape after water absorption. In this case, the formation of an extra hole at the bottom of the case body may raise the possibility that the water-holding element will fall out of the case body through that hole. This makes it impossible to form a hole at the bottom of the case body.

In this regard, in the hydroponics attachment 1 of the present invention, the above-described water-holding element 4 is formed by combining a plurality of filaments into one, and, an insertion hole 24 in opening form is created at the lower end of the case body 2 for guiding the root of the plant 27 growing downward through the water-holding element 4 to go down below the case body 2. The opening dimension of the insertion hole 24 is made smaller than the outer dimension of the water-holding element 4 to prevent the water-holding element 4 from falling out of the case body 2.

Next, a description will be given as to the water-holding element 4 and the insertion hole 24 that are the features of the hydroponics attachment 1 of the present invention.

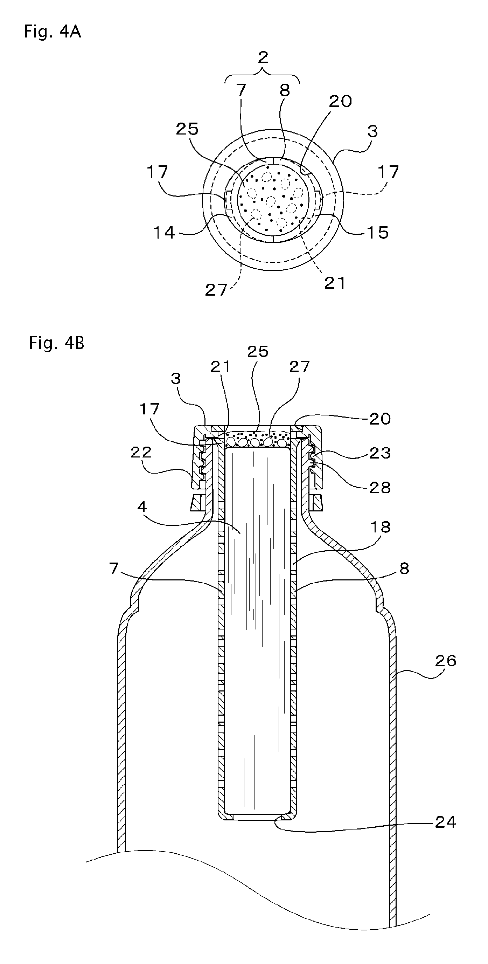

As shown in Fig. 4B, the water-holding element 4 of the present invention is designed in single-piece structure with the combined use of a plurality of filaments. Preferably, a plurality of synthetic resin-made filaments are combined into one in longitudinally aligned and parallel relation to each other. The thusly formed single-piece water-holding element 4 has a proper dimension for placement inside the case body 2. For example, given that the case body 2 has the shape of a bottomed cylinder, then, as shown in Fig. 4A, the water-holding element 4 takes a columnar shape.

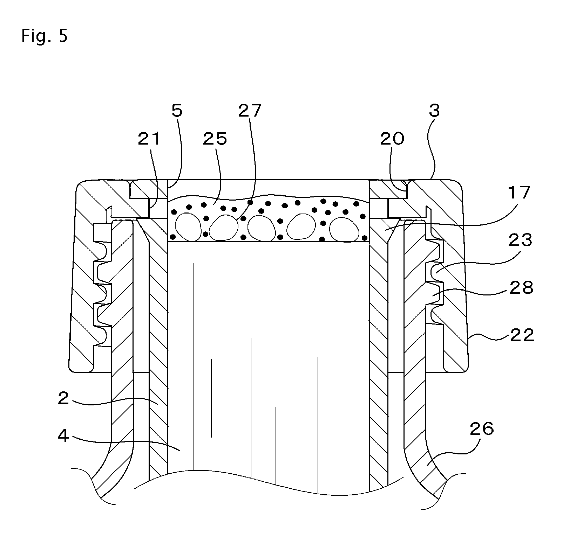

Moreover, as shown in Fig. 5, the above-described water-holding element 4 is placed inside the case body 2, with its upper surface positioned at a level lower than the level of the upper end of the case body 2. The seed of the plant 27 can be placed on this lower-located upper surface of the water-holding element 4.

The water-holding element 4 of this embodiment has a single-piece structure of a plurality of longitudinally aligned synthetic resin-made filaments.

As the filaments, for example, small-diameter filaments (the fiber diameter of which is less than or equal to 0.1mm, for example) made of a synthetic resin such as polyolefin, e.g. PE, or polyester, e.g. PET, can be used. Moreover, dozens to thousands of such filaments are put together in aligned and parallel relation to constitute a water-holding material capable of providing excellent water absorbability and air permeability by capillary action utilizing voids created between the aligned filaments. For example, straight water-absorbent fibers having fine hollow structure can be used for such a water-holding material. ,

As shown in Fig. 2D, the insertion hole 24 is created at the lower end (bottom) of the case body 2 of the present invention. The insertion hole 24 may be given any shape so long as it is capable of insertion of the root of the plant 27. Examples of the shape of the insertion hole 24 include a circular shape, a rectangular shape, and a combination of a plurality of circles and rectangles. In this embodiment, the insertion hole 24 takes a circular shape, and there is provided only one insertion hole 24 formed by drilling the bottom of the case body 2.

It is desirable that the opening diameter of the insertion hole 24 be smaller than the outer dimension of the water-holding element 4 for the sake of restraining the water-holding element 4 from downward movement. For example, assuming that the water-holding element 4 is 16 mm in outer diameter, then the insertion hole 24 is formed as a hole having a smaller opening diameter equal to about 60 to 80 percent of the outer diameter of the water-holding element 4 (for example, 10 mm). So long as the insertion hole 24 has such an opening diameter, it is possible to guide the root of the plant 27 to go up and down without a hitch while restraining the downward movement of the water-holding element 4.

With use of such a water-holding element 4, water and nutrients put inside the lower part of the bottle can be sucked up sufficiently toward the cap body, thereby allowing the water to permeate evenly through the seed, with consequent steady growth of the plant 27. Moreover, even if the plant 27, now reaching a certain level of growth, grows straight downward and eventually gets to the bottom of the case body 2, since the insertion hole 24 created at the bottom of the case body 2 allows the passage of the plant 27 through the case body 2 to outside for further root development, it never occurs that the plant 27 is inhibited from further growth.

The provision of such an insertion hole 24 is especially advantageous in the case of growing the taproot-type plant 27 in which the downward rooting habit is essential, and affords a distinguished growth-promotion effect.

Moreover, the water-holding element 4, being designed in single-piece structure with the combined use of a plurality of filaments, is unlikely to lose its shape even after water absorption. Accordingly, even if the above-described insertion hole 24 is provided, it never occurs that the water-holding element 4 falls out of the case body 2 through that hole.

In addition, as shown in Fig. 6A, in the interior of the water-holding element 4, since the root of the plant 27 grows preferentially in the direction of alignment of the filaments, it follows that the number of downwardly-growing root portions is increased, and sideward development of the root is restricted correspondingly. Thus, in hydroponics with use of the water-holding element 4, the root can be restrained from jutting into the side surface of the case body 2. This makes it possible to carry out the insertion and extraction of the attachment smoothly, and thereby achieve easy relocation of the plant 27.

Further, since the water-holding element 4 is placed in a position lower than the position of the upper end of the case body 2, it follows that the seed of the plant 27 set on the upper surface of the water-holding element 4 is surrounded with the case body 2. As a result, the seed of the plant 27 can be prevented from dropping out of the hydroponics attachment.

A hydroponics kit pursuant to the present invention comprises: the hydroponics attachment 1 thus far described; the seed of the plant 27 which is to be grown by hydroponics; and a germination promoter 25 (seed fixing material) for allowing the seed of the plant 27 to be fixedly set on the upper surface of the water-holding element 4.

As the germination promoter 25 adopted in the hydroponics kit, a potting medium formed by combining, for example, sand- or gravel-like zeolite particles and so forth is used. Such a germination promoter 25 excels in water dissipation, water retention, and fertilizer retention. As shown in Fig. 5, the germination promoter 25 is scattered so as to surround the seed set on the upper surface of the water-holding element 4.

Thus, the use of the hydroponics kit of the present invention does away with the need for a user to prepare various items required for hydroponics; that is, hydroponics can be easily carried out simply by preparing an empty, used PET bottle and water.

Where a specific type of plant 27 is concerned, from a marketing standpoint, it is desirable that the above-described hydroponics kit as a whole be bundled with a PET bottle containing water bearing nutrients required specifically for the growing of the plant 27. For example, there may be cases where a specific type of plant 27 which needs, for growth, a nutrient different from that needed by other type of plant 27 cannot be grown steadily only with a commercially-available nutritional product and water. In such a case, even if the growing of the plant 27 is difficult in ordinary households, where a PET bottle containing water bearing nutrients suitable for the growth of such a specific type of plant 27 is put on the market, the plant 27 can be grown at home with ease.

Next, a description will be given as to a method for growing the plant 27 by hydroponics using the hydroponics attachment 1 of the present invention.

The first step is to fit the hydroponics attachment 1 in the form of an assembly of the case body 2, the cap member 3, and the water-holding element 4 to the mouth of the drink bottle 26 containing water and nutrients. More specifically, the cap member 3 is screwed on the threaded portion 28 formed at the mouth of the drink bottle 26 for attachment. Then, the case body 2 engaged with the cap member 3 is immersed in the water in the drink bottle 26, and the water and nutrients find their ways into the case body 2 through the insertion hole 24 and the water-guiding hole 18 so as to be absorbed by the water-holding element 4.

The water and nutrients thusly absorbed by the water-holding element 4 is delivered even to the upper surface of the water-holding element 4 by capillary action, so that the water and nutrients can be distributed evenly throughout the water-holding element 4, from the lower and to the upper end thereof.

Next, the seed of the plant 27 is set on the upper surface of the water-holding element 4 in a water-holding state. More specifically, as shown in Figs. 2A to 2D, 3A, and 3B, in the water-holding element 4 placed with its upper surface positioned at a level lower than the level of the upper end of the case body 2, the seed of the plant 27 is set on the lower-located upper surface of the water-holding element. Then, the germination promoter 25 is placed so as to surround the seed set in thusly created space. In this way, the seed of the plant 27 can be fixedly set on the upper surface of the water-holding element 4, and is thus prevented from dropping from the hydroponics attachment 1.

As shown in Fig. 6A, as the seed germinates and the plant 27 grows gradually by making use of water and nutrients fed thereto through the water-holding element 4, the root of the plant 27 gradually develops substantially straight downward correspondingly. It is worthy of note that the above-described water-holding element 4 is so designed that the filaments are put together in vertically aligned and parallel relation, wherefore the root can be guided readily along the direction of alignment. Accordingly, the plant 27 grows with its root developing preferentially downward.

After further growth of the plant 27, the root of the plant 27 growing downward passes through the water-holding element 4 so as to reach the bottom of the case body 2. The root of the plant 27 which has reached the bottom of the case body 2 is guided, through the insertion hole 24 created at the lower end of the case body 2, to go out of the case body 2. Consequently, the root of the plant 27 is able to grow further downward smoothly outside of the case body 2; that is, the plant 27 can be grown continuously without a hitch.

Meanwhile, when it is desired to relocate the plant 27 under hydroponics, the hydroponics attachment 1 of the present invention is detached from the mouth of the drink bottle 26, and the case body 2 is pulled out of the drink bottle 26. As has already been described, in the hydroponics attachment 1 of the present invention, there is little root spreading over the side surface of the case body 2, because the root of the plant 27 hardly grows sideward. Therefore, the case body 2 can be pulled out easily without being caught in the mouth of the drink bottle 26. Accordingly, even if the drink bottle 26 is small relatively to the size of the plant 27, the relocation can be achieved with ease.

It should be understood that the application of the present invention is not limited to the embodiments described heretofore, and that the configurations or structures of constituent components, materials used for the components, and component combinations can be changed in an appropriate manner without departing from the spirit and scope of the invention.

For example, although the embodiment has been described with respect to the case where the case body 2 and the water-holding element 4 are cylindrically shaped, it is possible to adopt a case body 2 and a water-holding element 4 in the form of a rectangular prism, the section of which has a polygonal shape such as a hexagonal shape or an octagonal shape. Explanation of reference numerals and symbols

- 1: hydroponics attachment
- 2: case body
- 3: cap member
- 4: water-holding element
- 5: top opening
- 6: body segment
- 7: left-hand body segment
- 8: right-hand body segment
- 9: coupling strip
- 10: tying portion
- 11: protuberant piece
- 12: engagement hole
- 13: projection
- 14: left-hand projection
- 15: right-hand projection
- 16: projection engagement portion
- 17: retainer member
- 18: water-guiding hole
- 19: opening
- 20: upper part of opening
- 21: lower part of opening
- 22: non-slip portion
- 23: internal thread
- 24: insertion hole
- 25: germination promoter
- 26: drink bottle (PET bottle)
- 27: plant (seed)
- 28: threaded portion

## Claims

1. A hydroponics attachment comprising:
a cap member which is, via a threaded portion preformed on amouth of a drinkbottle for cap attachment, detachably screwed on the mouth of the drink bottle, and has an opening formed on an upper surface thereof;
a case body shaped like a cylinder with a bottom, which is fitted in the opening of said cap member; and
a water-holding element placed in an interior of said case body, for absorbing water stored in the drink bottle, so that hydroponics can be carried out with use of the water absorbed by said water-holding element,
said water-holding element being designed in single-piece structure with use of a plurality of filaments,
said case body having at its lower end an insertion hole in opening form for guiding a root of a plant growing downward through said water-holding element to go down below the case body,
said insertion hole having an opening dimension which is smaller than an outer dimension of said water-holding element.

2. A hydroponics attachment according to claim 1,
wherein said water-holding element is made of a plurality of filaments put together in aligned and parallel relation longitudinally of said case body.

3. A hydroponics attachment according to claim 1,
wherein said water-holding element is placed inside said case body, with its upper surface positioned at a level lower than a level of an upper end of said case body.

4. A hydroponics attachment according to claim 2,
wherein said water-holding element is placed inside said case body, with its upper surface positioned at a level lower than the level of the upper end of said case body.

5. A hydroponics kit comprising:
the hydroponics attachment as set forth in any one of claims 1 to 4;
seed of a plant which is to be grown by hydroponics; and
a germination promoter for allowing the seed of said plant to be fixedly set on an upper surface of the water-holding element.
